# EUROPEAN PATENT APPLICATION

(11) **EP 3 082 338 A1**
(43) Date of publication of application: **19.10.2016**
(21) Application number: 15305550.4
(22) Date of filing: 14.04.2015
(51) Int. Cl.: H04N 19/40

(54) **A method and device for just-in-time transcoding**

(71) Applicant: Harmonic Inc., San Jose, CA 95134 (US)
(72) Inventor: Perron, Claude, 35830 BETTON (FR); Amstoutz, Marc, 35200 RENNES (FR); Allie, Stéphane, 35230 SAINT ARMEL (FR)
(74) Representative: Nguyen Van Yen, Christian

(57) **Abstract**

The invention relates to a method and device for performing Just-In-Time Transcoding. The invention is applicable in the domain of video delivery, notably OTT video delivery, wherein users access video content in different representations. An encoding device according to the invention comprises modules for encoding video in a first representation, and generating symbols for retrieving decisions for transcoding video in a second representation. A transcoding device according to the invention is capable of decoding video compressed in a first representation, retrieve video coding decisions for a second representation according to video coding decisions of the first representation and symbols, and transcode on-the-fly video from the first to the second representation, upon the request of clients.

## Description

### FIELD OF THE INVENTION

The present invention relates to the field of delivery of video content. More specifically, it relates to the encoding and transcoding of video content for delivery notably in OTT (Over-The-Top) mode.

### BACKGROUND PRIOR ART

In present days the consumption of video content over traditional IP networks is dramatically increasing. This increase is in part due to VOD (Video On Demand) services, and the multiplication of devices on which video can be accessed. By way of example only, video content can notably be accessed from various kinds of terminals (smart phones, tablets, PC, TV, Set Top Boxes, game consoles, etc...) connected through various types of networks (broadcast, satellite, cellular, ADSL, fiber, etc...).

A video content can be accessed in very different forms. It can for example be accessed in various resolutions. The resolutions available today include for example 480p (720x480 pixels), 576p (720x576 pixels), 720p (1280x720 pixels), 1080i (1920x1080 pixels split in two interlaced fields of 540 lines), 1080p (1920x1080 pixels), 2160p (3840x2160 pixels) and 4320p (7680x4320 pixels). The resolutions 720p, 1080i and 1080p are generally referred as "HD" (High Definition) or "HDTV" (High Definition Television), the resolution 1080p being more specifically referred as "Full HD" (Full High Definition). Resolutions 2160p and 4320p are generally called "UHD" (Ultra High definition) or "UHDTV" (Ultra High Definition Television), 2160p being more specifically called "4K UHD" (4 kilo Ultra High Definition) and 4320p being more specifically called "8k UHD" (8 kilo Ultra High Definition).

Due to the huge size of raw video, video content is generally accessed in compressed form. The video content is therefore also associated with a video compression standard. The most widely used video standards belong to the "MPEG" (Motion Picture Experts Group) family, which notably comprises the MPEG-2, AVC (Advanced Video Compression also called H.264) and HEVC (High Efficiency Video Compression, also called H.265) standards. Generally speaking, a format which is more recent, allows more encoding feature and/or provides a better compression ratio is considered as more advanced. For example, the HEVC format is more recent and more advanced than AVC, which is itself more recent and more advanced than MPEG-2. Therefore, HEVC yields more encoding features and greater compression efficiency than AVC. The same goes between AVC in relation to MPEG-2. The compression standards of the MPEG family are block-based compression standards. Other block-based compression standards exist, for example the Google formats VP8, VP9 and VP10.

Even within a same video compression standard, a video content can be encoded with very different options. It can be for example encoded at various bitrates. It can also be encoded using respectively only I-Frames (I-Frame standing for Intra-Frame), I and P-Frames (P standing for Predicted Frame) or I, P and B frames (B standing for Bi-directional frames). More generally, the number of available encoding options increases with the complexity of the video format.

The diversity of devices able to access video content is associated with a diversity of optimal video formats, each device having a preferred video format driven by the screen size. Indeed each device has its own resolution, as well as decoding features. For example a set-top box is now able to decode UHD resolutions. Meanwhile, an average smart phone such as Nokia™ Lumia 520 has a resolution of 480x800 pixels, while an up-market smart phone such as the iPhone™ 6 has a 1080p resolution. The vast diversity of video display devices therefore results in a large diversity of video display resolutions.

The diversity of video decoding devices also leads to a diversity of decodable video formats. Indeed, recent and advanced decoding devices are already able to decode HEVC video, while a standard smart phone is able to decode AVC video only, and a large number of set-top boxes in the US are still only able to decode MPEG-2 video.

Depending of its type of connection, a video decoding device may be able to receive a video content at different bitrates. For example, a set-top box or a PC using Wi-FI or a wired connection is capable of receiving video of a high quality and, therefore, a high bitrate. In contrast, a mobile device using a 3G connection will only be capable of receiving video with a low quality at a low bitrate.

The high diversity of video decoding devices, video compression standards, resolutions and available bitrates therefore leads to a large combination of possible video types and formats to be able to serve a wide range of customers across heterogeneous networks.

OTT (Over-The-Top) video delivery aims at delivering video content for any user of an IP network. In OTT delivery, a video is available in a number of different representations. A representation is defined by, for example, video resolution, bitrate, compression format, encoding options and packaging. A client receives information about the available representations, for example in a manifest file. The video is split in a succession of small files, called segments, which are encoded in all available representations. The client then downloads and plays the small files in the representation of interest, and can then playback the video. In case of variations in the available bandwidth, a video client can download video segments encoded at various bitrates to match the variations of available bandwidth. A representation also defines a packaging for video content, e.g a file format and extension, a device generally is not being able to parse all file formats.

On IP networks, the video is typically delivered using a CDN (Content Delivery Network). A CDN is generally composed of a large number of servers. An origin or headend server is configured for producing the video content, which is then sent across the network to playback devices. When a large number of clients are present in a region, a CDN usually comprise a server called edge server for that region. The role of the edge server is then to receive the requests of the clients for that region, and send them to the headend server. When a plurality of requests for the same content are received by an edge server, the edge server is able to send only one request for this particular content to the headend server, and dispatch the content corresponding to this request locally to the clients. This system has the advantage of saving bandwidth within the CDN between headend and edge servers.

It is possible to achieve OTT delivery by encoding and packaging all possible representations of the video on the headend server, then sending, upon the requests of clients, video data all across the CDN. This method has the disadvantage that it saturates the bandwidth and the storage of the CDN . Indeed, with this method each representation that has been requested by at least one client is sent throughout the CDN, which makes a large amount of data transit through the CDN. Meanwhile, data is commonly stored in the servers while it is delivered. Then, if a large number of representations are sent over the CDN, a large number of OTT files will be stored on the servers, and more specifically on edge servers, during the delivery of video.

A solution to this issue is Just-In Time Packaging (JITP) and Just-In-Time Transcoding (JITT). JITP and JITT are disclosed by Robinson et al., HEVC Benefits and the Path to Deployment, Society of Cable Telecommunication Engineers, Proceedings of the Cable-Tec Expo'14. They are also disclosed by the corresponding video available online at http://expo.scte.org/workshops-and-events/expo-workshop-preview-video-erica-robinson/. In the solution disclosed by Robinson, only the highest resolution of the video in a single packaging is transmitted between headend and edge servers, and the video content is packaged and transcoded on the fly on edge servers, for example to another video format or resolution, to meet the requests of clients. This solution offers the advantage of limiting the need for bandwidth between headend and edge servers, and the need for storage on edge servers. However, it dramatically increases the computational load on edge servers. Indeed, video encoding is a very complex operation that consumes large amount of resources. More specifically, the compression of video at an acceptable quality/rate ratio is performed by making a large number of decisions on block types, size and motion vectors, which are performed by a large number of encode options and iterations. All these loops, iterations and decisions consume a lot of resources. Therefore, performing on-the-fly transcoding on edge server as disclosed by Robinson becomes impossible at a reasonable cost and good quality/bit rate ratio for a large number of representations in OTT delivery.

There is therefore the need for a device and method to perform Just-In-Time Transcoding and thus deliver a large number of different representations of a video content to users, while limiting the computation cost generated by transcoding on edge servers and achieving an optimal quality/bit rate ratio for the delivered video.

### SUMMARY OF THE INVENTION

To this effect, the invention discloses a device and method for streamlining Just In Time Transcoding while preserving a broadcast grade video quality.

The invention discloses a video encoding device comprising a first module configured for encoding an input video content into a compressed video content in a first representation, a representation being defined by at least a resolution and a compression standard, said encoding comprising the computation of a first set of video coding decisions, and a second module configured for generating symbols representative of a correspondence between a video coding decision in a second set of video coding decisions for a second representation of said input video content and at least one video coding decision in the first set of video coding decisions.

Advantageously, a symbol represents a video coding decision in the second set of video coding decisions in relation to at least one video coding decision in the first set.

Advantageously, a symbol represents a rule of conversion of at least a video coding decision in the first set of video coding decisions into a video coding decision in the second set of video coding decisions.

Advantageously, video coding decisions comprise one of a determination of a block partition, a determination of a block type, a determination of a motion vector, an intra prediction mode, and a determination of a transform type.

Advantageously, the video encoding device further comprises a third module configured for sub-sampling video frames, and the first video representation has a first video resolution and the second video representation has a second resolution, lower than the first, the third module is configured for sub-sampling at least one frame of video from the first to the second resolution, the second module is configured for performing at least one video coding decision for at least one video coding block, said decision comprising retrieving a subset of the first set of video coding decisions, said subset comprising all decisions of the same type than the at least one video coding decision that apply to the area of the at least one frame that is covered by the at least one video coding block, testing all the video coding decisions of the subset, selecting one of the video coding decisions of the subset as the video coding decision in the second set, and generating a symbol representative of the decision selected in relation to the subset.

Advantageously, the first video representation has a first video compression standard and the second video representation has a second video compression standard, said first video compression standard allowing, for at least one type of video coding decisions, all the possible decisions provisioned by the second video compression standard, and at least one decision forbidden by the second video compression standard, the second module is configured for performing at least one video coding decision of the at least one type of video coding decisions for at least one video coding block, said decision comprising retrieving the corresponding video coding decision in the first set of video coding decisions; if the corresponding video coding decision is allowed in the second video compression standard, use it as the at least one video coding decision; if the corresponding video coding decision is not allowed in the second video compression standard, retrieve a set of possible decisions in the second video standard and generate a symbol representative of the video coding decision in the second set in relation to the set of possible decisions.

The invention also discloses a video transcoding device comprising: a first module configured for decoding a compressed video content in a first representation, a representation being defined by at least one of a resolution and a compression standard, the encoding of said compressed video having been performed according to a first set of video coding decisions, and extracting the first set of video coding decisions; a second module configured for re-encoding the video into a compressed video content in the second representation, at least one decision in re-encoding being performed according to the first set of video coding decisions and symbols representative of a correspondence between a video coding decision in a second set of video coding decisions for a second representation of said compressed video content and at least one video coding decision in the first set of video coding decisions.

Advantageously, a symbol represents a video coding decision in the second set of video coding decisions in relation to at least one video coding decision in the first set of video coding decisions.

Advantageously, a symbol represents a rule of conversion of at least a video coding decision in the first set of video coding decisions into a video coding decision in the second set of video coding decisions.

Advantageously, video coding decisions comprise one of a determination of a block partition, a determination of a block type, a determination of a motion vector, an intra prediction mode, and a determination of a transform type.

Advantageously, the video transcoding device comprises an additional module for sub-sampling video frames, and the first video representation has a first video resolution and the second video representation has a second resolution, lower than the first; the additional module is configured for sub-sampling at least one frame of video from the first to the second resolution between the first module and the second module; the second module is configured for retrieving at least one video coding decision for at least one video coding block, said retrieval comprising: retrieving a subset of the first set of video coding decisions, said subset comprising all decisions of the same type than the at least one video coding decision that apply to the area of the at least one frame that is covered by the at least one video block; retrieving a symbol representative of the video coding decision in the second set of video coding decisions in relation to said subset.

Advantageously, the first video representation uses a first video compression standard and the second video representation uses a second video compression standard, said first video compression standard allowing, for at least one type of video coding decisions, all the possible decisions provisioned by the second video compression standard, and decisions forbidden by the second video compression standard; the second module is configured for retrieving at least one video coding decision of the at least one type of video coding decisions for at least one video coding block, said retrieval comprising: retrieving the corresponding video coding decision in the first set of video coding decisions; if the corresponding video coding decision is allowed in the second video compression standard, use it as the at least one video coding decision; if the corresponding video coding decision is not allowed in the second video compression standard, retrieve a set of possible decisions in the second video standard according to the corresponding video coding decision, and a symbol representative the video coding decision in the second set of video coding decision in relation to the set of possible decisions.

Advantageously, the second module comprises one of a first sub-module for performing block partition which is configured for partitioning blocks in accordance to the block partition of the compressed video content in the first representation and the symbols representative of a correspondence between a video coding decision in a second set of video coding decisions for a second representation of said compressed video content and at least one video coding decision in the first set of video coding decisions; a second sub-module for applying transforms which is configured for choosing a transform in accordance to the transforms of the compressed video content in the first representation and the symbols representative of a correspondence between a video coding decision in a second set of video coding decisions for a second representation of said compressed video content and at least one video coding decision in the first set of video coding decisions; a third sub-module for performing intra prediction which is configured for performing intra prediction in accordance to intra prediction of the compressed video content in the first representation and the symbols representative of a correspondence between a video coding decision in a second set of video coding decisions for a second representation of said compressed video content and at least one video coding decision in the first set of video coding decisions; a fourth sub-module for performing inter prediction and motion compensation which is configured for performing inter prediction and motion compensation in accordance to motion vectors of the compressed video content in the first representation and the symbols representative of a correspondence between a video coding decision in a second set of video coding decisions for a second representation of said compressed video content and at least one video coding decision in the first set of video coding decisions.

The invention also discloses a method for encoding an input video content comprising: encoding the input video content into a compressed video content in a first representation, a representation being defined at least by a resolution and a compression standard, said encoding comprising the computation of a first set of video coding decisions; computing symbols representative of a correspondence between a video coding decision in a second set of video coding decisions for a second representation of said input video content and at least one video coding decision in the first set of video coding decisions.

The invention also discloses a method for transcoding a video content comprising: decoding a compressed video content in a first representation, a representation being defined at least by a resolution and a compression standard, the encoding of said compressed video having been performed according to a first set of video coding decisions, and extracting the first set of video coding decisions; re-encoding the video into a compressed video content in a second representation, at least one decision in re-encoding being performed according to the first set of video coding decisions and symbols representative of a correspondence between a video coding decision in a second set of video coding decisions for a second representation of said video content and at least one video coding decision in the first set of video coding decisions.

The invention also discloses a computer program product, stored on a computer readable medium, configured for encoding an input video content comprising: code means for encoding the input video content into a compressed video content in a first representation, a representation being defined at least by a resolution and a compression standard, said encoding comprising the computation of a first set of video coding decisions; code means for computing symbols representative of a correspondence between a video coding decision in a second set of video coding decisions for a second representation of said input video content and at least one video coding decision in the first set of video coding decisions.

The invention also discloses a computer program product, stored on a computer readable medium, configured for transcoding a video content comprising: code means for decoding a compressed video content in a first representation, a representation being defined at least by a resolution and a compression standard, the encoding of said compressed video having been performed according to a first set of video coding decisions, and extracting the first set of video coding decisions; code means for re-encoding the video into a compressed video content in a second representation, at least one decision in re-encoding being performed according to the first set of video coding decisions and symbols representative of a correspondence between a video coding decision in a second set of video coding decisions for the second representation of said input video content and at least one video coding decision in the first set of video coding decisions.

The invention also discloses a user terminal comprising communication, video decoding and video playback capabilities, said user terminal being configured for: sending to an edge server a request for receiving a video content, said content being available on the server in a plurality of representations, a representation being defined at least by a resolution and a compression standard, said request containing a selection of a representation in the plurality of representations; receiving from the edge server the video content in the selected representation, the selected representation being produced on the edge server by a video transcoding method using as input received from an origin server: i) a source of the video content in a master representation in at least one of a higher resolution and a more advanced standard; ii) at least one of the decision criteria used for coding said selected representation.

The invention also reduces the need for bandwidth and storage for servers within a CDN.

Moreover, the invention facilitates the delivery of a large number of different representations of a video content, and therefore facilitates the optimization of the delivery of video content to a large number of different playback devices.

In addition, a system according to the invention is able to deliver video content to playback devices at high resolution, while being able to transcode on-the-fly video content to a smaller resolution video for an optimized playback and/or a limitation of bandwidth consumption for playback devices with smaller resolution screens without saturating the bandwidth and storage within a CDN.

Also, a system according to the invention is able to deliver video using the latest and most advanced formats such as HEVC, while keeping backward compatibility with devices equipped with legacy video decoders such as AVC decoders without saturating the bandwidth and storage within a CDN.

Also, a system according to the invention is able to deliver adaptive video content, for example video content with adaptive resolution or bitrate, to a single user.

A device or method according to the invention is able to efficiently re-use video coding decisions in order to limit the computational load of video encoding when encoding video in a large number of different representations.

Also, a system according to the invention is able to reduce the size of metadata associated with video coding decisions by storing only the information that cannot be inferred from video coding decisions performed for a former video representation.

The invention is also advantageous in a CDN for OTT video delivery, because it concentrates the computation needs on the headend/origin server, the edge servers being used only for straightforward video transcoding upon the requests of the clients.

### BRIEF DESCRIPTION OF THE DRAWINGS

The invention will be better understood and its various features and advantages will emerge from the following description of a number of exemplary embodiments and its appended figures in which:
- Figure 1 illustrates a CDN network of the prior art;
- Figure 2 illustrates an example of video encoder of the prior art;
- Figure 3 illustrates an example of encoding device according to the invention;
- Figures 4a and 4b illustrate two examples of transcoding devices in two embodiments of the invention;
- Figure 5 illustrates an encoding method in an embodiment of the invention;
- Figure 6 illustrates a transcoding method in an embodiment of the invention;
- Figures 7a, 7b, 7c and 7d illustrate four examples of video coding decisions in four embodiments of the invention.

### DETAILED DESCRIPTION OF THE INVENTION

In this specification, the invention will be described by way of examples relative to the delivery of video content in OTT mode.

However, these examples are not limitative, and the invention is applicable to any mode of video delivery wherein the video content is available in a plurality of formats or representations to the user, which includes the encoding of video content in a first format or representation and the transcoding into a second format or representation.

For example, the invention may be applicable for streaming a video content to multiple users with multiple representations using a plurality of servers. The invention may also be applicable for storing video content on a server, while keeping the ability of transcoding and delivering it in a plurality of representations or formats afterwards.

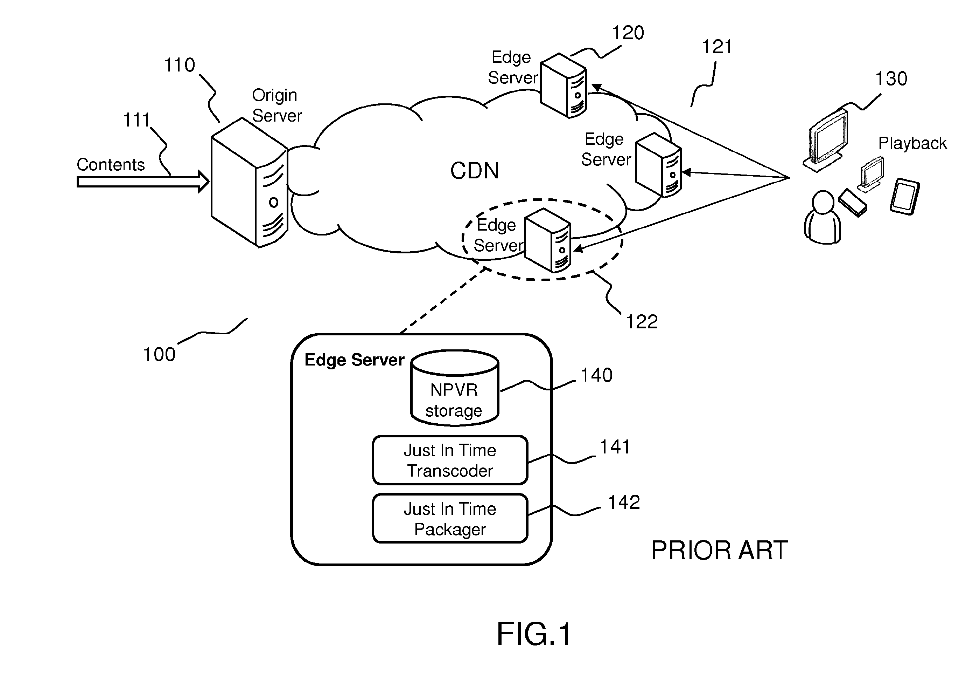

Figure 1 illustrates a CDN network of the prior art.

A CDN is usually a large system of servers deployed in multiple data centers across the internet. The goal of a CDN is to serve a large number of end-users with high availability and high performance. CDN are commonly used for delivering video and streaming video to end-users.

Figure 1 illustrates an exemplary CDN 100. This CDN is used for video delivery or streaming, for example using OTT video delivery. It comprises an origin or headend server 110. This server receives video content 111. Video content 111 is usually of very high quality. It may for example be baseband video. It may also be video stored in high quality storage format, such as Apple ProRes™, or video compressed in a very high bitrate (mezzanine or pivot format). Video content can be produced in real time, for example for streaming live sport events or TV shows. It can also be pre-recorded and stored content, for example in the case of Video On Demand (VOD) delivery.

The CDN further comprises a large number of servers in connection with each other in order to serve end users 130 equipped with playback devices. End users 130 send requests to the CDN to receive video content. In order to save bandwidth within the CDN, when a large number of end users are present in an area, an edge server 120, 121 or 122 is placed in the area. The users in the area then advantageously send requests to edge servers 120, 121,122. When edge servers 120, 121, 122 receive a plurality of requests for the same content from a plurality of users, they are configured to send a single request to the head-end server 110, receive the content and transfer it to end users 130. This network architecture permits to deliver video content with high availability and high performance to end users 130. Indeed, origin server 110 can make available to the users a large number of different video contents. Meanwhile, the limitation of the number of requests between edge servers 120, 121, 122 and origin server 130 permits to limit bandwidth requirements within the CDN. Edge servers 120, 121 and 122 and origin server 130 usually communicate through internet backbone, which are the long-distance and high-capability data backbone that define the "skeleton" of the internet network.

The use of internet backbone between edge servers 120, 121, 122 and origin server 110 indeed allows the centralization of the production of video content to a single server which can be located far away from end-users, and therefore concentrates the production of a large number of different video contents in a single place in order to serve end users with the greatest variety of video contents. Meanwhile, the coordination of client requests by edge servers 120, 121, 122 allows end-users 130 to access to this variety of video contents without saturating the internet backbones.

There is today an important shift towards delivering of video in OTT mode. In OTT delivery, video content is split in small video files. Video content is defined by a sequence of these small files. Sequences of files are sent to end user devices, which play them successively, to produce a continuous video playback. OTT delivery can be performed using packaging technologies such as HLS developed by Apple, HDS developed by Adobe, Smooth Streaming developed by Microsoft, or MPEG Dash standardized by the ISO/CEN MPEG organization. Using these technologies, end users are generally able to retrieve a list of available representations of the video content. A representation of the video content defines the characteristics of the video files. These characteristics include for example the compression format or standard, the resolution, or the bitrate of the video. They may also include various encoding options, and the packaging of the video. The packaging of the video defines the way video files are organized, for example file format and extension. End-user is therefore able to choose the best representation according to network and playback features. It may for example choose the resolution which is the closest to playback resolution. It may also select a compression standard according to the video decoders which are available on the playback device. Meanwhile, it may select a bitrate to obtain the video with the highest quality for a video playback in real time.

In order to serve a high number of end-users with very diverse playback capabilities, a video content in OTT is usually available in a large number of different representations, that represent the large number of possible combinations between compression formats, bitrates, resolutions, file packaging, etc... The delivery of video content in all representations that have been requested by at least one end-user between origin server 110 and edge servers 120, 121, 122 would therefore have the undesirable effect of making a huge amount of data transit on the internet backbone between the origin server 110 and edge servers 120, 121, 122.

To solve this issue, edge servers 120, 121, 122 can be configured for performing Just-In-Time Packaging (JITP) and Just-In-Time Transcoding (JITT). In addition, Edge servers can be equipped with Network Personal Video Recorder (NPVR) storage 140. NPVR storage 140 is used to store OTT video files to offer the PVR capability to the end user. The edge servers with the NPVR capability can also contain a Just-In-Time Transcoder 141 and Just-In-Time Packager 142. In JITT and JITP, only the representation of video content with the highest quality is sent by origin server 110 to edge servers 120, 121, 122. Then, edge servers transcode and package video content on-the-fly for delivering to every end-user the video content in his preferred representation. This method has the advantage of limiting the amount of data that transit between origin server 110 and edge servers 120, 121, 122. It also limits the NPVR storage needs in edge servers, since they do not need to store OTT files for all representations that are requested by the end-user that can use devices of different types.

However, this solution leads to a huge computation load on edge servers. Indeed, video transcoding is a very computationally intensive task. When applied to a large number of different video contents and representations, the calculation capabilities needed to perform on-the-fly transcoding can lead to a unacceptable deployment cost that kills the solution.

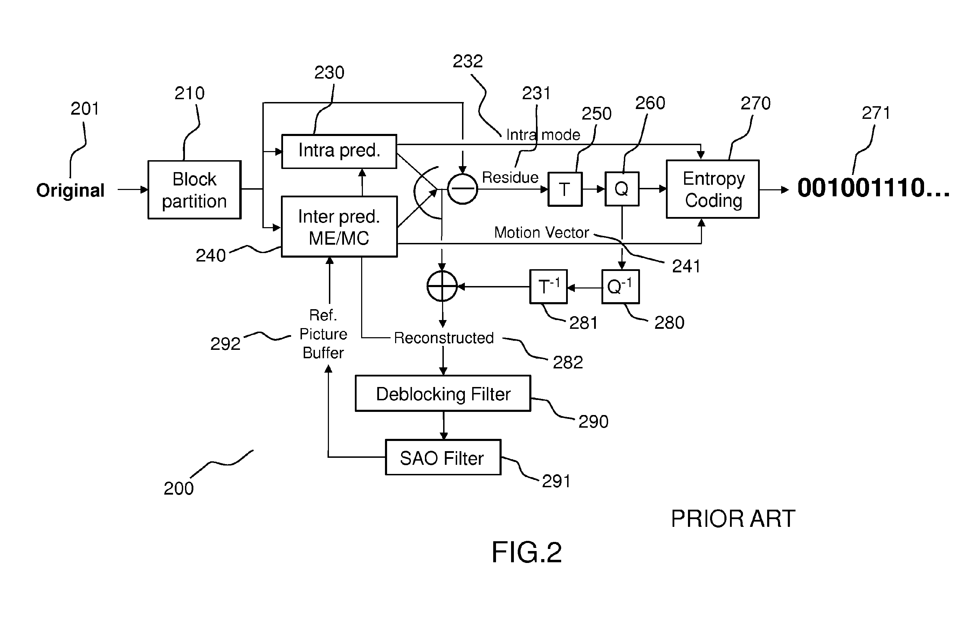

Figure 2 illustrates an example of video encoder of the prior art.

This exemplary video encoder encodes video using a block-based method. Its architecture is representative of the architecture of video encoders of the MPEG family (MPEG-2, AVC and HEVC for example), but other block-based video encoders, such as VP8, VP9 and VP10, work on the same principles.

The video encoder 200 encodes video frames from an original content 201. These frames are usually in raw form. When the initial video is in a compressed format, video frames are usually decoded in order to feed raw decoded frames to the video encoder 200.

The video encoder comprises a module 210 for performing block partition. In block-based video coding methods, a frame is split into a plurality of blocks. Compression standards and techniques usually allow splitting into blocks of different sizes. For example, AVC allows the following block sizes: {4x4, 8x8, 8x16, 16x8, 16x16}, while HEVC allows the following sizes for Coding Blocks (CB, the equivalent of block in HEVC): {4x4, 8x8, 16x16, 32x32, 64x64}. There is therefore a very high number of possible ways of splitting a frame into blocks or coding blocks. Different block sizes yields different results according to the topology of video samples within the block. The separation of a frame into blocks of different sizes is called block partition. Since different block sizes are more or less efficient according to the characteristics of different parts of a video frame, the choice of block partition has an important impact of quality/size ratio in video encoding. The objective of block partition module 210 is to produce a block partition that leads to a high quality/bit rate ratio.

Block partition module 210 can also be configured to determine a block type for each block. The main block types are inter block and intra block. An intra block is predicted using only data from the same frame, while an inter block can also be predicted according to previously reconstructed frames. According to compression techniques, a wide range of block types can be defined.

According to block type, one of an intra prediction module 230 or an Inter prediction module 240 is used for predicting the content of the block. Intra prediction block 230 predicts the content of a current block according to decoded block in the same frame. On the contrary, Inter prediction module 240 predicts the content of a current block according to frames that have been previously encoded and locally decoded by the encoder. Inter prediction module 240 is notably able to determine motion vectors 241 that indicate where data similar to the current block can be found in previous frames. On the contrary, Intra prediction is configured to determine a direction in which similar blocks can be found within the same frame. Intra and Inter prediction modules use the similarities of a current block with other blocks in the same frame and previous or future frames respectively to predict a block that is similar to the current block. Then they output the difference between predicted and actual block. This difference is called residue 231. The choice of the right motion vectors and intra prediction mode has an important impact on the amount of information in the residue 231, and therefore on compression efficiency.

The residue is then transformed by a transformation module 250. This module applies a frequency transform to the residue. According to compression standard, different transforms of different sizes are available: for example, these transforms can be Discrete Cosine Transform (DCT), Integer DCT, Hadamard Transforms. They can be applied on matrix of different sizes, for example on 4x4 matrix, 8x8 matrix, etc... Similarly to block size, the size and type of the transform that is used for each block can be more or less adapted for each block and their choice has an impact on the quality/size ratio of the compressed video.

Afterwards, transformed values are quantized by a quantization module 260. Values are quantized by dividing the value of each transformed coefficient, for example by a quantization parameter or quantization coefficient. AVC standard defines both a quantization parameter that is used for quantizing a whole macroblock, and matrixes of quantization coefficients for quantizing separately each transformed coefficient. Quantization is a step for achieving a target bitrate. Indeed, higher quantization coefficients lead to a higher compression ratio but more visible artifacts. It is possible to meet a target bitrate for video by adjusting quantization coefficients for each block.

Afterwards, an entropy coding module 270 produces a bitstream 271. Entropy coding module 270 codes information at the output of encoding modules, including intra mode information 232, motion vectors 241, and transformed and quantized residue. Entropy coding methods are based on probability models of the possible symbols at the output of quantization, in order to pack the most probable symbols in a very small size. Entropy coding methods include for example Huffman, arithmetic coding, CABAC (Context Adaptive Binary Arithmetic Coding), CAVLC (Contexte Adaptive Variable Length Coding).

Intra and Inter prediction modules 230 and 240 predict the content of blocks according to previously reconstructed or decoded blocks. In order to have these blocks available at encoding time, the video encoder 200 comprises an internal decoding loop. This loop is applied on each block. It comprises an inverse quantization module 280 that performs an inverse quantization using coefficients similar to those used by quantization module 260 for the same block. It then comprises an inverse transform module 281 for inversing transformation and obtaining a reconstructed block 282. For inter coding, a de-blocking filter 290 and Sample Adaptive Offset (SAO) filter 291 are applied on complete decoded frames, which are stored in a reference picture buffer 292. Inter prediction module 240 has access to reference picture buffer 292 in order to compute motion vectors and perform motion compensation.

The different decisions that are taken in the different modules of the video encoder 100 have a dramatic influence on quality/size ratio of the final video content. These choices include the choice of a block partition and block types performed in block partition module 210, the choice of intra prediction performed in intra prediction module 230, the choice of motion vectors performed in inter prediction module 240, the choice of a transform performed in transform module 250 and the quantizer module 260. The decisions are also the most complex and time-consuming part of video encoding. An exhaustive test of all possibilities to obtain the best possible quality/size ratio is rarely used in practice because the number of combinations to test is too important. On the other hand, very fast methods with very few tests exist for performing video coding decision with very low CPU load. However, these methods lead to very poor video coding performance and to a poor video quality/rate ratio. Improved methods exist for each decision type to obtain an optimal decision with a reasonable computational load. However, despite these improvements performing coding decisions remains by far the most CPU-intensive task in video coding, while having a dramatic incidence on video coding performance.

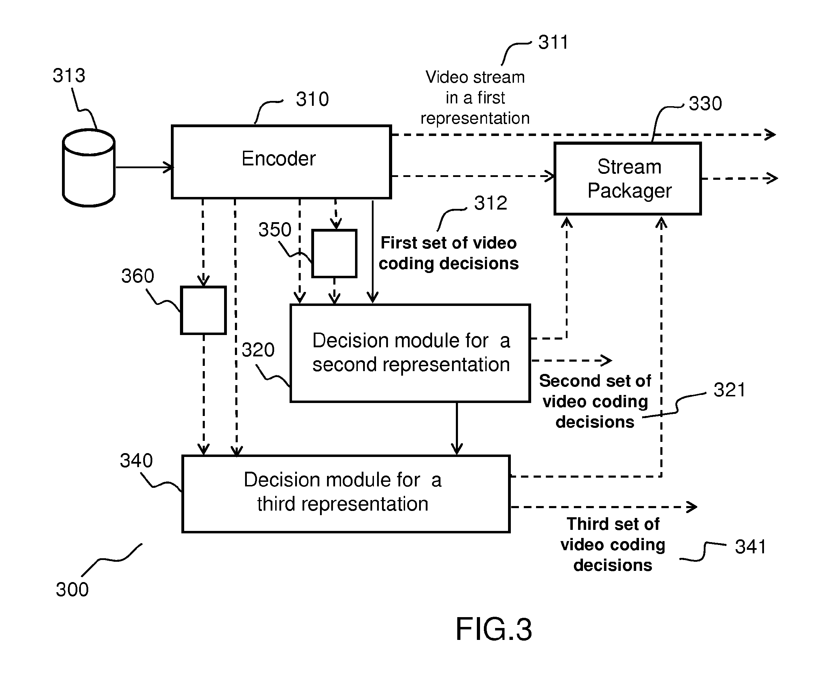

Figure 3 illustrates an example of encoding device according to the invention.

The video encoding device 300 depicted on figure 3 is provided by way of non-limitative example of an embodiment of the invention only. Other possible embodiments of the invention will be apparent to a person of ordinary skill in the art reading the description below. It can for example be part of an origin server of a CDN such as the origin server 110 of the CDN 100.

The video encoding device 300 comprises a first module 310 configured for encoding an input video content 313 in a compressed video content 311 in a first representation. In a number of embodiments of the invention, when end users have access to a plurality of representations, the first module 310 is configured for encoding the video content in the representation that keeps the highest amount of information compared to input video content 313. For example, it may be configured for encoding video content into the representation with the highest resolution, the most complex and advanced compression format, the highest bitrate, or a combination of such characteristics. Advantageously, the compressed video content 311 is therefore the content with the highest possible quality amongst all available representations. The first module 310 may for example be a video encoding module known in the prior art, such as the video encoder 200. In preferred embodiments of the invention, the first module 310 is a block-based video encoder. In a number of embodiments of the invention, the first module is a video encoder of the MPEG family, for example an AVC or a HEVC video encoder. In other embodiments of the invention, the first module 310 encodes the video content in other block-based video formats, for example VP8, VP9 or VP10 or AVS.

The encoding in the first module includes the computation of a first set 312 of video coding decisions. This set may include all decisions performed during video coding, including block partition, the choice of block types, motion vectors, intra block prediction and transforms, quantizer step.

The video encoding device 300 further comprises at least a second module 320 configured for generating symbols representative of a correspondence between a video coding decision in a second set of video coding decisions for a second representation of said input video content and at least one video coding decision in the first set of video coding decisions. In a number of embodiments of the invention, the video encoding device 300 comprises for each representation of said input video content different from the first representation a module for generating symbols representative of a correspondence between a video coding decision in a set of video coding decisions for a representation and at least one video coding decision in the first set of video coding decisions. For example, if the video content is available in three different representations, the video encoding device 300 comprises a module 340 for computing symbols 341 representative of a correspondence between a video coding decision in a third set of video coding decisions for a third representation of said input video content and at least one video coding decision in the first set of video coding decisions.

In a number of embodiments of the invention the second module 320 generates the second set of video coding decisions. These embodiments are advantageous, since it is able to generate, for each possible decision of the first set, an optimized one.

In a number of embodiments of the invention the second module 320 re-uses the first set 312 of video coding decisions to generate the second set of video coding decisions.

In a number of embodiments of the invention, the second module 320 performs decisions for the second representation on the same frames that were used by the first module.

In other embodiments of the invention, the frames in the first and the second representation have a different layout, for example a different resolution, bit depth or color space, and the encoding device 300 comprises a third module 350 for modifying the frames between the first and the second module.

Similarly, the module 340, or any additional module for performing decisions for a further representation of the video may take as input the same frames than the first module 310, or frames transformed by an additional module, for example the module 360.

In a number of embodiments of the invention, the second representation has a lower resolution than the first representation, and the third module 350 is configured for sub-sampling frames from the first to the second resolution. Then, the frames are sub-sampled to the second resolution in order to make video coding decisions in the second representation. In a number of embodiments of the invention, the second module 320 is configured for efficiently using the first set 312 of video coding decisions. For example, when performing a video coding decision for a block, it can retrieve all decisions of a given type that relate to the area of the frame covered by this block in the first set 312 of video coding decisions, and test all video coding decisions of this subset to check which one is the most suitable decision. For example, when testing possible block sizes within a macroblock, if 4x4 and 8x8 block sizes decisions have been performed in the first set of coding decisions in the area covered by the macroblock, the second module 320 can be configured for testing these two block sizes, rather than further testing 16x16, 8x16, 16x8 or other block sizes.

This embodiment is advantageous. Indeed, video coding decisions of the second set can be taken with fewer tests than a standard decision of block types, since the number of block types to test is reduced. Meanwhile, since the subset of possible decisions is chosen from an area that represents the same part of the frame than the block where to perform the second set of decisions, this subset of decisions has a high probability of being well adapted to this block, and therefore producing good compression results. Moreover, since the number of possible decisions is reduced, it is possible to store these decisions in a metadata file using a smaller number of bits, thereby reducing additional metadata size. That is to say, a video encoding device 300 according to the invention is able to minimize additional metadata that carries the Edge Transcoding decisions while preserving the Edge Transcoding video quality compared to an Edge Transcoder that would separately compute video compression for each representation.

In another embodiment of the invention, the first video representation uses a first video compression standard and the second video representation uses a second video compression standard, said first video compression standard allowing, for at least one type of video coding decisions, all the possible decisions allowed by the second video compression standard, and at least one decision forbidden by the second video compression standard. It is for example the case if the first module 310 encodes the video content in HEVC and the second module 320 computes corresponding decisions for AVC, since HEVC is more complex and comprises a higher number of possible video coding decisions than AVC. The same is also applicable, for example, if the first and second representations of the video respectively are AVC and MPEG-2 or HEVC and MPEG-2.

In this embodiment of the invention, the second module 320 is also able to efficiently compute the second set of video coding decisions. For example, when performing a decision for a block, it can retrieve a corresponding coding decision in the first set of video coding decisions. If this decision is allowed or applicable in the second video compression standard, it can use it directly as the video coding decision in the second set. If it is not the case, it can perform a video coding decision which is allowed in the second compression standard. Statistics of the best match can be elaborated during a learning phase so that the result is used as an inferring algorithm. The statistics can recorded once for all using some test material. In another embodiment of the invention, statistics are elaborated during the encoding process.

This embodiment is advantageous, since a decision is computed only if the corresponding decision in the first set of video coding decisions is not applicable in the second video coding standard. This therefore avoids performing some decisions and saves CPU. Meanwhile, the decisions which are directly applicable from the first to the second set of decisions do not need to be stored in the metadata 321 representative of said second set of video coding decisions. The second module 320 can therefore be configured to store a symbol representative of a video coding decision only in the case where a decision in the first set of video coding decisions is not applicable in the second video standard. This reduces metadata size.

One example of such embodiment can be found in the decisions of intra prediction modes between HEVC and AVC. HEVC allows 33 different intra prediction modes which correspond to 33 directions of search of a corresponding block, while AVC allows 8 intra prediction modes. When performing a decision for intra prediction mode, if the first representation is in HEVC and the second in AVC, the second module 320 can perform the intra prediction and store the corresponding decision in the metadata only if the corresponding decision in the first set of video coding decision is not directly applicable in AVC.

In an embodiment of the invention, each module for taking decisions in a different representation uses only the first set of video coding decisions as input. In another embodiment of the invention, they use several video coding decisions. For example, if an end user needs 3 different representations, respectively in a first representation in HEVC at 1080p, a second representation in HEVC at 720p and a third representation in AVC at 720p, the third set of video coding decisions for the third representation can be taken using the first set of video coding decisions for the first representation, the second set of video coding decisions for the second representation, or a combination of both.

In a number of embodiments of the invention, the second module 320 generates, rather than the decisions of the second set themselves, a set of rules for converting decisions of the first set of video coding decisions into decisions of the second set, and generates metadata representative of said set of rules.

In yet other embodiments of the invention, the second module 320 generates both symbols representative of decisions and symbols representative of rules of conversion of decisions, For example these two types of symbols may relate to different decisions or types of decisions.

A set of rules of conversion allows a transcoder to convert each decision in the first set, or decisions in a subset of the first set, into decisions in the second set, when transcoding video from the first to the second representation. In an embodiment, the rules of decisions are stored in a table, wherein each decision of the first set is associated to a decision in the second set.

These embodiments are advantageous, since the metadata to store rules of conversion has a smaller size than metadata that contains each decision.

The second module can generate a set of rules of conversion for different parts of the video. It can for example generate rules for the whole video, for each frame, or for a GOP. In other embodiments of the invention, a set of rule is defined for different types of parts of the video. The module 320 can for example generate a set of rules for I-frames, one for P-frames and one for B-frames; it can also generate one set of rules for intra blocks and one for inter blocks, etc...

In a number of embodiments of the invention, module 320 uses the first set of video coding decisions as input. In a number of embodiments of the invention, the module 320 computes one or a plurality of sets of rules optimized for subparts of the video. For example, different sets of rules may produce variable results for each frame or GOP. In an embodiment of the invention, the module 320 is able to generate sets of rules of conversion optimized for each frame, frame type or GOP, for example by collecting statistics or estimating a quality/size ratio of a video that will be transcoded using this set of rules.

Different methods are possible for generating rules of conversion. For example several possible rules can be tested, and the rule that provides the best quality/size ratio for a part of the video is selected. In other embodiments of the invention rules are generated for automatically associating to each in the representation the closest decision in the second representation. In yet other embodiments of the invention the video content is encoded in the second representation, and the rules are generated to select the decision that is the most commonly performed when encoding video in the second representation.

Symbols produced by the second module 320, the module 340 or any module that produces symbols representative of a correspondence between video coding decisions needs to be retrieved afterwards to retrieve video coding decisions or rules of conversion.

In a number of embodiments of the invention, symbols are sent separately from compressed video stream 311. In other embodiments of the invention, symbols are stored in a metadata sent with video stream 311, for example in the same file.

In a number of embodiments wherein symbols are stored within metadata, the video encoding device 300 is also configured for associating metadata that contains symbols generated by the second module 320, the module 340 or any additional module with the corresponding video content and representation. This association can be performed in various ways. In an embodiment of the invention, a packager module 330 is configured for packaging the metadata 321 or 341 and the video content 311 within the same files or stream. For example, metadata can be stored within the private data of an existing video standard. Therefore, a video decoder or transcoder that is not able to handle such metadata will skip them without prejudice for the video decoding or transcoding. Meanwhile, a video transcoder that is able to handle these metadata for transcoding video in a second representation will be able to handle them. Similarly, metadata can be integrated in the user data of video files or stream rather than within the compressed stream itself. This embodiment is advantageous, since the metadata is stored within the same file than video content, and directly usable for transcoding video content to a second representation. In another embodiment of the invention, the metadata is stored in a separate file and sent on demand to the servers that needs a given metadata file for transcoding video into a given representation. The later embodiment is advantageous, since only the metadata that are necessary for transcoding in a given representation are transmitted.

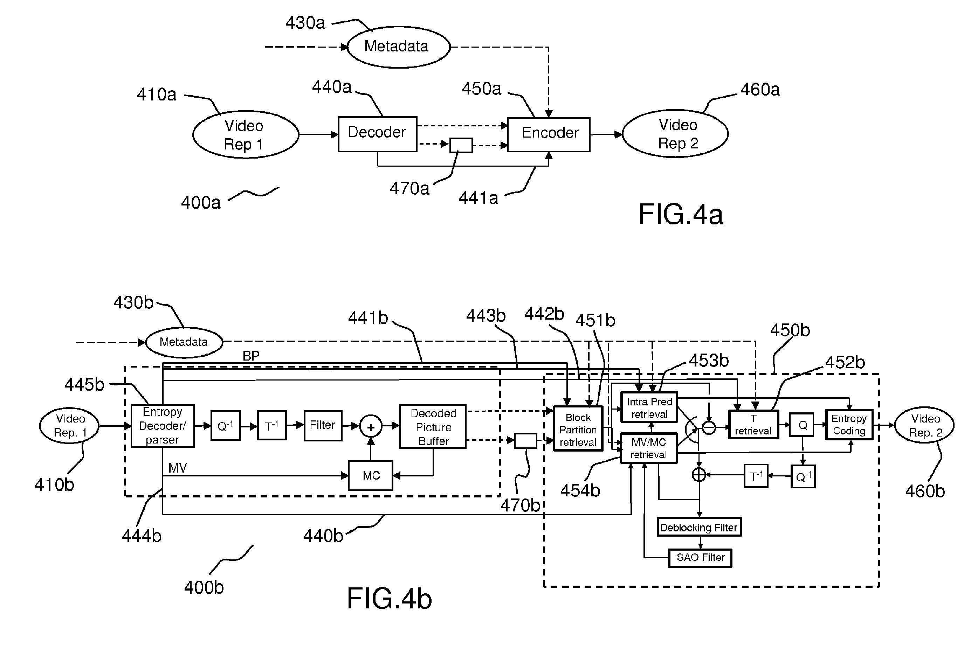

Figures 4a and 4b illustrate two examples of transcoding devices in two embodiments of the invention.

Figure 4a illustrates a transcoding device in an embodiment of the invention. The transcoding device 400a receives compressed video content 410a in a first representation. It comprises a first module 440a configured for decoding the video content 410a. The first module 440a can be for example configured for decoding the compression format in which the content 410a is encoded into. Meanwhile, the first module 440a is configured for extracting video coding decisions 441 a stored within the compressed content 410a and corresponding to the first representation.

The transcoding device 400a also comprises a second module 450a, configured for re-encoding the video into a compressed video content 460a in a second representation, at least one decision in re-encoding being performed according to the first set 441 a of video coding decisions symbols representative of a correspondence between a video coding decision in a second set of video coding decisions for the second representation of said compressed video content and at least one video coding decision in the first set of video coding decisions.

In a number of embodiments of the invention, said at least one decision is performed using the first set of video coding decisions and a symbol in metadata 430a representative of said decision.

In other embodiments of the invention, said at least one decision is performed using the first set of video coding decisions and a set of rules of conversion of decisions of the first set of video coding decisions into decisions of said second set of video coding decisions. Such set of rules provides a direct conversion between decisions of the first set that relates to the first representation and decisions of the second set that relate to the second representation.

In a number of embodiments of the invention, the set of rules is predefined in the video transcoding device 400a. According to various embodiments of the invention, a single set of rules of conversion from the first set of video coding decisions to the second set of video coding decisions may be predefined for the whole video, or a set of rules may be predefined for different types of video parts. For example one set of rules may be defined for I-frames, one for P-frames and one for B-frames. In yet other embodiments, one set of rules may be defined for intra blocks and a second for inter blocks.

In other embodiments of the invention, the set of rules is received in metadata 430a. In an embodiment of the invention a single set of rules is received for the whole video. In other embodiments of the invention, sets of rules are received for different parts of the video. For example metadata 430a may contain a set of rules for each frame or for each GOP. In other embodiments of the invention metadata 430a contains a plurality of sets of rules for a plurality of types of part of the video. For example, it may contain a set of rules per frame type or per block type.

In a number of embodiments of the invention, the transcoding device 400a is configured for receiving metadata 430a representative of a second set of video coding decisions for a second representation of the video content or a set of rules of conversion from the first set of video coding decisions to the second set of video coding decisions. In an embodiment of the invention, metadata 430a is in the same file or stream than compressed video content 410a. In another embodiment of the invention, metadata 430a is received separately and/or upon request of the transcoding device 400a, for example in a separate file or stream.

Therefore, the transcoding device 400a is able to transcode the video content to a second representation without performing all decisions usually taken in video encoding, and therefore saving a lot of time and CPU. In a number of embodiments, the transcoding device 400a transcodes video content into a plurality of different representations according to a plurality of metadata representative of a plurality of video coding decisions for this plurality of representations or a plurality of sets of rules of conversion from the first set of video coding decisions to the second set of video coding decisions. The CPU saved by not making video coding decisions allows the transcoding device 400a to transcode the video content into a large number of representations in parallel in order to serve a large number of end users with different video playback capabilities.

In an embodiment of the invention, video coding decisions are retrieved from the metadata. In another embodiment of the invention, only a part of video coding decisions are retrieved from the metadata, and others are performed by the transcoding device 400a. For example, the transcoding device 400a can retrieve block partition from the metadata 430a, but perform the computation of motion vectors.

In a number of embodiments of the invention, the output of the first module 440a is directly fed to the input if the second module 450a, which is to say the frames decoded by the first module 440a are re-encoded by the second module 450a.

In other embodiments of the invention, the frames at the output of the first module 440a and the frames at the input of the second module 450a have different layouts. It is for example the case when the first and the second representations have different resolutions, different bit depths, different color spaces, etc... In a number of embodiments of the invention, the transcoding device 400a according to the invention comprises an additional module 470a for transforming the frames between the first module 440a and the second module 450a. In an embodiment of the invention, the additional module 470a is configured for rescaling video frames from the resolution of the first representation to the resolution of the second representation. In other embodiments of the invention, the additional module 470a may be configured for modifying the bit depth of frames from the bit depth of the first representation to the bit depth of the second representation of modifying the color space of frames from the color space of the first representation to the color space of the second representation.

In order to retrieve a video coding decision of a given type, the second module 450a is configured for retrieving a subset of the first set of video coding decisions, said subset comprising all decisions of the same type than the at least one video coding decision that apply to the area of the at least one frame that is covered by the at least one video block. Then the second module retrieves in the metadata representative of said second set of video coding decisions a symbol representative of one of the decisions in the subset of the first set of video coding decisions, or applies a rule in a set of rules of conversion of decisions of the first set of video coding decisions into decisions of said second set of video coding decisions to obtain the video coding decision in the second representation.

In another embodiment of the invention the first representation has a first compression standard and the second representation a second compression standard that comprises fewer possible video coding decisions than the first. For retrieving a video coding decision in the second set and the second compression standard, the second module 450a is configured for retrieving the corresponding video coding decision in the first set of video coding decisions. If this decision is applicable in the second compression standard, the second module 450a is configured for using it as the second set and the second compression standard. If it is not the case, it is configured for retrieving from the metadata 430a a symbol representative of the video coding decision in the second set, or applying a rule in a set of rules of conversion of decisions of the first set of video coding decisions into decisions of said second set of video coding decisions to obtain the video coding decision in the second representation.

In a number of embodiments of the invention, a transcoding device 400a is used for video delivery in OTT mode. For example, it can be embodied in an edge server 120, 121, 122 of a CDN. In a number of embodiments of the invention, a transcoding device 400a is configured for receiving requests from clients to deliver the video content in a given representation. The transcoding device 400a is then configured for transcoding the video content and delivering the transcoded content to the user in the given representation.

If the metadata associated to this given representation is stored in a file different form the file in which the compressed video content 410a is stored, the transcoding device 400a may be configured for querying an origin server, for example the server 110, for the metadata associated to the given representation. This embodiment is advantageous, because the metadata is sent only when it is necessary for transcoding and it therefore diminishes the amount of data sent from the head-end to the edge servers. On the other hand, embodiments in which metadata is stored within the same file or stream than compressed video content 400a renders the transcoding device more reactive, since it is able to transcode and deliver immediately video content in any representation upon the request of a client.

Figure 4b illustrates a transcoding device 400b in a number of embodiments of the invention.

Similarly to the transcoding device 400a, the transcoding device 400b is configured for receiving a compressed video content 410b in a first representation, and symbols representative of a correspondence between a video coding decision in a second set of video coding decisions for the second representation of said compressed video content and at least one video coding decision in the first set of video coding decisions.

The video transcoding device 400b comprises a first module 440b for decoding input video content in the first representation, and a second module 450b for re-encoding the video content 460b in a second representation.

In a number of embodiments of the invention, the output of the first module 440b is directly fed to the input if the second module 450b, which is to say the frames decoded by the first module 440a are re-encoded by the second module 450b.

In other embodiments of the invention, the frames at the output of the first module 440b and the frames at the input of the second module 450b have different layouts. It is for example the case when the first and the second representations have different resolutions, different bit depths, different color space, etc... In a number of embodiments of the invention, the transcoding device 400b according to the invention comprises an additional module 470b for transforming the frames between the first module 440b and the second module 450b. In an embodiment of the invention, the additional module 470b is configured for rescaling video frames from the resolution of the first representation to the resolution of the second representation. In other embodiments of the invention, the additional module 470b may be configured for modifying the bit depth of frames from the bit depth of the first representation to the bit depth of the second representation of modifying the color space of frames from the color space of the first representation to the color space of the second representation.

Similarly to module 450a, the second module 450b can retrieve decisions for the second representation according to the first set of video coding decisions and symbols representative of a correspondence between a video coding decision in a second set of video coding decisions for a second representation of said compressed video content and at least one video coding decision in the first set of video coding decisions.

In a number of embodiments of the invention the transcoding device 400b receives metadata 430b for transcoding video into a second representation. Metadata 430b may comprise symbols representative of video coding decisions in the second set of video coding decisions, symbols representative of video coding decisions in the second set of video coding decisions in relation to decisions of the first set, a set of rules of conversion of decisions of the first set of video coding decisions into said second set of video coding decisions, or a combination thereof. In other examples the transcoding device may receive metadata for a plurality of representations and retrieve video coding decisions for this plurality of representations from video coding decisions for the first representation and metadata associated to each representation. In some embodiments and representations the video coding decisions for a representation may be retrieved from the metadata associated with this representation and video coding decisions for a representation other than the first representation. This may for example be the case if video content is available in 3 representations, respectively at 1080p, 720 and 360p. The video coding decisions for the representation at 360p may be retrieved according to the video coding decisions for the representation at 1080p, but also according to video coding decisions at 720p, or a combination of the two. In yet other embodiments of the invention, the transcoding device 400b comprises a predefined set of rules of conversion of decisions in the first set of video coding decisions into decisions in the second set of video coding decisions.

More specifically, the first module 440b comprises a first sub-module 445b configured for parsing the compressed video content in the first representation and performing entropy decoding. Stream parsing and entropy decoding permits to retrieve video coding decisions from the first set of video coding decisions that have been used for coding video content into the compressed content 410b in the first representation. Amongst these video coding decisions, the first sub-module 445b is notably configured for extracting block partition and block types 441 b, transform types 442b, intra prediction modes 443b, and motion vectors 444b.

The first module 440b also comprises modules of a video decoder known in the prior art such as modules for performing inverse quantization, inverse transform, filtering motion compensation and a decoded picture buffer for storing previously decoded frames.

The second module 450b comprises one of a first sub-module 451 b, a second sub-module 452b, a third sub-module 453b and a fourth sub-module 454b. The first sub-module 451 b is configured for retrieving the video coding decisions for block partition and block types for the second representation. To do so, it uses as input the block partition and block types 441 b of the video coding decisions of the first representation. According to various embodiments of the invention, it is able to retrieve video coding decisions using information from metadata 430b or a predefined set of rules of conversion. In embodiments wherein decisions are retrieved using information from metadata 430b, the decisions retrieved are the same than those that had been previously computed by an encoding device, for example the encoding device 300. The first sub-module 451 b is then able to advantageously retrieve a block partition that provides good compression results, without using complex calculations like a standard module for block partition.

The second sub-module 452b is configured for retrieving and applying a transform on blocks. The second sub-module 452b uses the transforms 442b from the first set of video coding decisions and information from metadata 430b or a predefined set of rules of conversion to retrieve a transform to use, rather than testing the output of all possible transforms like a standard module for choosing a transform, thereby avoiding complex computations. In embodiments wherein decisions are retrieved using information from metadata 430b, the decisions retrieved are the same than those that had been previously computed by an encoding device, for example the encoding device 300.

The third sub-module 453b is configured for retrieving intra prediction modes using the intra prediction mode 443b of the first representation and information from the metadata 430b or a predefined set of rules of conversion, and performing intra prediction. Similarly to sub-modules 451b and 452b, the third sub-module 453b is therefore able to retrieve an intra prediction mode that produces good compression results without using complex calculations associated to the determination of an intra prediction mode in standard intra prediction modules. In embodiments wherein decisions are retrieved using information from metadata 430b, the decisions retrieved are the same than those that had been previously computed by an encoding device, for example the encoding device 300.

The fourth sub-module 454b is configured for retrieving motion vectors for the second representation, and perform motion compensation. It is configured for retrieving motion vectors for the second representation according to the motion vectors 444b of the first representation, and information from the metadata 430b or a predefined set of rules of conversion. It is therefore able to retrieve effective motion vectors without having to perform complex motion estimation like a standard motion compensation module. In embodiments wherein decisions are directly retrieved using information from metadata 430b, the decisions retrieved are the same than those that had been previously computed by an encoding device, for example the encoding device 300.

The second module 450b also comprises modules known in the prior art for performing video coding, such as modules for performing quantization, entropy coding, and an internal decoding loop comprising modules for performing inverse quantization, inverse transformation, de-blocking, SAO filtering. These modules knonw in the prior art may for example be similar to those of the video encoding device 200.

In this example the video transcoding device is configured for retrieving block partition, block types, intra prediction, motion vectors and transform types without the need for performing complex computations, iterations, tests and loops usually used for making these video coding decisions. This allows the re-encoding of the video to be straightforward and have a complexity similar to video decoding, while obtaining a transcoding video with high quality/size ratio. A transcoding device according to the invention is therefore able to transcode in parallel video content to a large number of different representations, and serve end users with high quality video content in a large number of video representations.

In other embodiments, transcoding devices may be configured to retrieve only a subpart of video coding decisions from video coding decisions for the first representation and metadata, and compute the other decisions using prior art methods. For example, another example of transcoding device according to the invention could be configured for retrieving block partition and motion vectors from decisions for the first representation and metadata, and re-calculate intra prediction and transform types using intra prediction and transform modules similar to those of a video encoder from prior art, such as those of the video encoding device 200. In these embodiments, one of the first sub-module 451 b, the second sub-module 452b, the third sub-module 453b and the fourth sub-module 454b can be replaced by a prior art module for performing the same decisions, for example the modules 210, 250, 230 or 240 respectively of the prior art encoder 200.

Moreover, retrieval of each decision type can be performed using symbols representative of a video coding decisions in the second set in metadata 430b, a set of rules of conversion of decisions in metadata 430b, a predefined set of rules of conversion of decisions. Therefore, every possible combination of retrieval and computation of decisions is possible. For example, block partition can be retrieved by submodule 451 b using symbols representative of block partitions received in metadata 430b, intra prediction can be retrieved by submodule 453b by the application of a set of rules of conversion of intra prediction decision received in metadata 430b, motion vectors can be retrieved by submodule 454b by the application of a predefined set of rules of conversion of motion vector decisions, and the choice of transform can be fully computed.

Each possible solution for retrieving decisions has its own merits and advantages. Retrieving decisions using a symbol in metadata representative of each decision has the advantage of retrieving the exact decisions that have been performed by an encoding device, for example the encoding device 300. Therefore, it is possible to compute decisions using a very high quality and complex method in an encoding device, and retrieve very optimized decisions for transcoding without complex computation. Retrieving decisions using a set of rules of conversion in metadata provides a good tradeoff between the size of metadata and the quality of decisions. Indeed the size of the set of rules or table of conversion in the metadata is smaller than the size of symbols for each decision. Meanwhile, an encoding device such as the encoding device 300 is able to compute sets of rules of conversion optimized for a video and a representation, or parts of the video and a representation. It can for example compute an optimized set of rules for each frame, GOP, etc... Thereby, video transcoding device can transcode video from a first to a second representation with limited computing needs, while obtaining good decisions in the second representation and limiting the size of metadata. Retrieving decisions using a predefined set of rules removes the need for receiving metadata, thereby limiting the amount of data to transmit between an encoding and a transcoding device. This embodiment is interesting in cases where predefined decisions are good enough for the second representation. Re-computing decisions removes the need for receiving metadata, thereby limiting the amount of data to transmit between an encoding and a transcoding device, while allowing the transcoder to perform a decision optimized for the video to transcode.

The invention therefore allows a person skilled in the art of video coding to select the decisions that may be retrieved using each of the possible embodiments described above, according to a tradeoff between the size of metadata and the quality/size ratio of each decision.

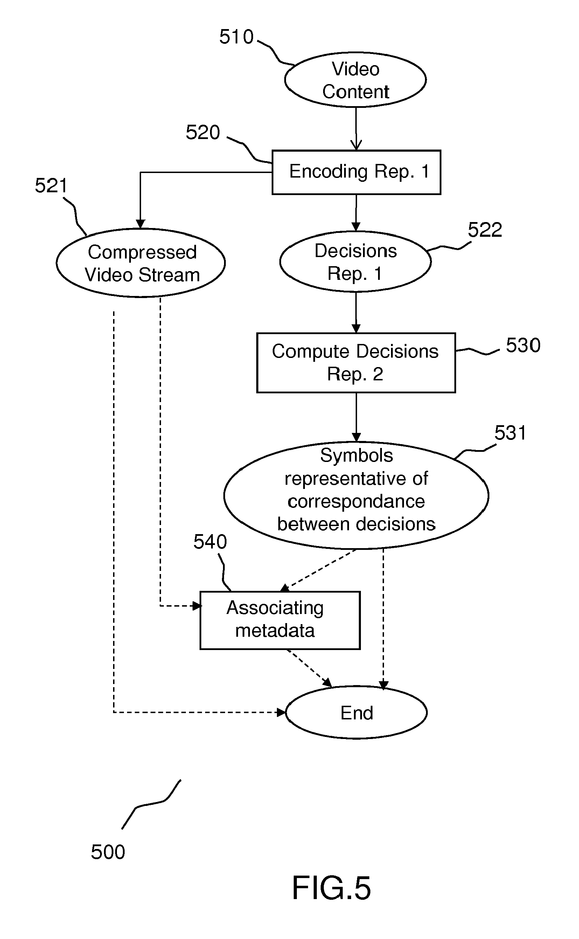

Figure 5 illustrates an encoding method in an embodiment of the invention.

The method 500 aims at encoding an input video content 510 and comprises a first step 520 for encoding the input video content 510 into a compressed video content 521 in a first representation, said encoding comprising the computation of a first set 522 of video coding decisions. As said above, video coding decisions may notably comprise the determination of a block partition, block types, motion vectors, intra prediction and transform types, and a video representation can be for example characterized by a resolution and a compression method or standard.

The method 500 further comprises a second step 530 for computing symbols 531 representative of a correspondence between a video coding decision in a second set of video coding decisions for a second representation of said input video content and at least one video coding decision in the first set 522 of video coding decisions.

Optionally, if the first and second representations have different resolutions, the method 500 may comprise a step for re-sampling video frames from the first to the second resolution. Likewise, the method 500 may comprise an optional step for modifying the bit depth of decoded frames if the first representation and a second representation have a different bit depth, an optional step for modifying the color space of the frames if the first and the second representations have a different color space, etc...

In a preferred embodiment, the decisions performed at step 530 are based, when applicable, on the first set 522 of video coding decisions.

In some embodiments of the invention symbols 531 representative of correspondence between decisions are stored within metadata. The method 500 then comprises a third step 540 for associating the metadata comprising symbols 531 with the compressed video content 521 and the second representation. In other embodiments symbols 531 can be sent separately.

The method 500 is for example embodied in a video encoding device according to the invention such as the video encoding device 300. A person of ordinary skill in the art can therefore easily adapt the various embodiments of video encoding device into an encoding method 500 according to the invention.

By way of possible examples of various embodiments of the method:
- if the first and the second representations have different resolutions, a video coding decision of a given type and a given block can be performed, at the second step 530, by evaluating all decisions of this type in the first set of video coding decisions that have been performed in the area covered by the given block, selecting the best decisions and storing in the metadata a symbol representative of an index of the decisions that has been selected;
- if the first and the second representations are characterized by a first and a second compression method respectively, the second step 530 can evaluate, for a given video coding decision, if the corresponding decision in the first set 522 of video coding decisions is applicable in the second compression method, and store a symbol representative of a video coding decision only if the corresponding decision in the first set is not directly applicable in the second compression method;
- metadata comprising symbols 531 could be located in the private data of the compressed video content 521, the user data of a file that contains the compressed video content 521, or compressed video content 521 and metadata 531 can be stored and/or sent in separate files or streams;

- the method can be used for generating a plurality of different metadata for a plurality of sets of video coding decisions for a plurality of representations of the video content different from the first;
- in the latter embodiment, the computation of video coding decisions for a representation of the video content can be performed according to a set of video coding decisions for a representation other than the first, or according to more than one set of video coding decisions.
- a set of rules of conversion of decisions of the first set 522 of video coding decisions into decisions of the second set of video coding decisions can be computed in order to maximize the quality/size ratio of the video in the second representation;
- a set of rules of conversion can be generated for different parts of the video. Rules can for example be generated for the whole video, for each frame, or for a GOP. In other embodiments of the invention, a set of rule is defined for different types of parts of the video. One set of rules can for example be generated for I-frames, one for P-frames and one for B-frames; one set of rules can also be generated for intra blocks and one for inter blocks, etc...

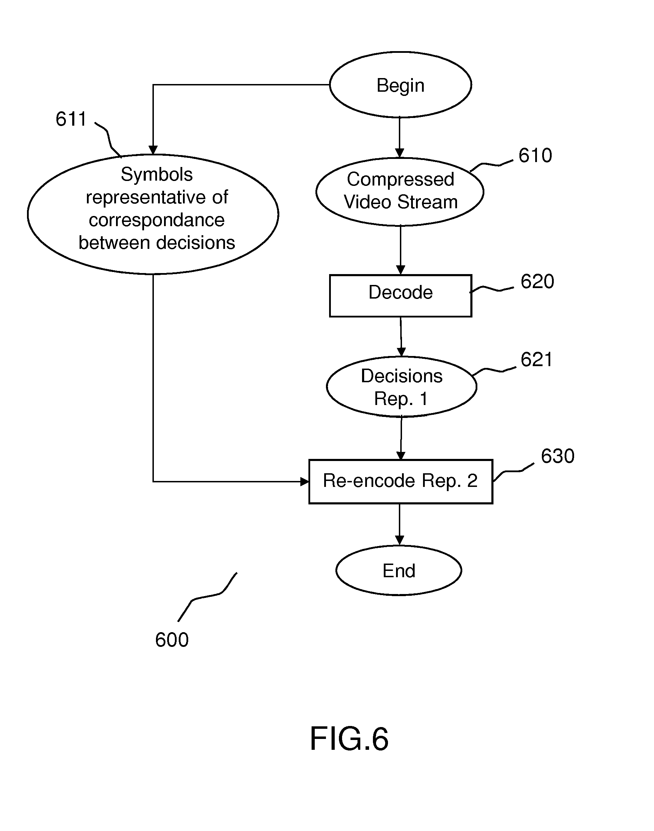

Figure 6 illustrates a transcoding method in an embodiment of the invention.

The method 600 aims at transcoding a video content, and comprises a first step 620 for decoding a compressed video content 610 in a first representation, the encoding of said compressed video having been performed according to a first set 621 of video coding decisions, and extracting the first set 621 of video coding decisions. As indicated above, video coding decisions may notably comprise the determination of a block partition, block types, motion vectors, intra prediction and transform types, and a video representation can be for example be characterized by a resolution and a compression method or standard.

The method 600 further comprises a second step 630 for re-encoding the video into a compressed video content in a second representation, at least one decision in re-encoding being performed according to the first set 621 of video coding decisions and symbols 611 representative of a correspondence between a video coding decision in a second set of video coding decisions for the second representation of said video content and at least one video coding decision in the first set of video coding decisions.

According to various embodiments of the invention, a set of rules of conversion of decisions of the first set of video coding decisions into decisions of the second set of video coding decisions can be predefined or received within metadata 611.

In an embodiment of the invention, the second set of video coding decisions has been computed by the same device than the compressed video content 610, using the first set of video coding decisions as input. In another embodiment of the invention, at least one video coding decision in re-encoding is performed using a set of rules of conversion received within metadata 611, and said set of rules of conversion has been computed by the same device than the compressed video content 610.

Optionally, if the first and second representations have different resolutions, the method 600 may comprise a step for re-sampling video frames from the first to the second resolution. Likewise, the method 600 may comprise an optional step for modifying the bit depth of decoded frames if the first and a second representations have a different bit depth, an optional step for modifying the color space of the frames if the first and the second representation have a different color space, etc...

The method 600 is for example embodied in a video transcoding device according to the invention such as the video transcoding device 400a or 400b. A person of ordinary skill in the art can therefore easily adapt the various embodiments of video transcoding device into a transcoding method 600 according to the invention.

By way of possible examples of various embodiments of the method:
- if the first and the second representations have different resolutions, a video coding decision of a given type and a given block can be performed, a video coding decision of a given type for a given block can be retrieved by retrieving a subset of the first set 621 of video coding of this given type that apply to the area covered by the given block, and retrieve in the metadata 611 a symbol representative of the decisions that has been selected in the subset;
- if the first and the second representations are characterized by a first and a second compression method respectively, a video coding decision of the second set can be retrieved by verifying if the corresponding video coding decision in the first set is applicable or allowed in the second compression method, then using this decision if it is applicable and retrieve from the metadata 611 a symbol representative of a video coding decision applicable in the second compression method if it is not the case;
- the metadata 611 could be located in the private data of the compressed video content 610, the user data of a file that contains the compressed video content 610 or compressed video content 610 and metadata 611 can be stored and/or sent in separate files or streams;

- the method can be used for transcoding the compressed video content 610 to a plurality of representations of the video content different from the first using a plurality of sets of video coding decisions for the plurality of representations of the video content different from the first;
- in the latter embodiment, the retrieval of video coding decisions for a representation of the video content can be performed according to a set of video coding decisions for a representation other than the first, or according to more than one set of video coding decisions;
- different types of video coding decisions of the second set can be retrieved using symbols representative of said video coding decisions of the second set in metadata 611, a set of rules of conversion of decisions in metadata 611, or a predefined set of rules of conversion, or any combination thereof;

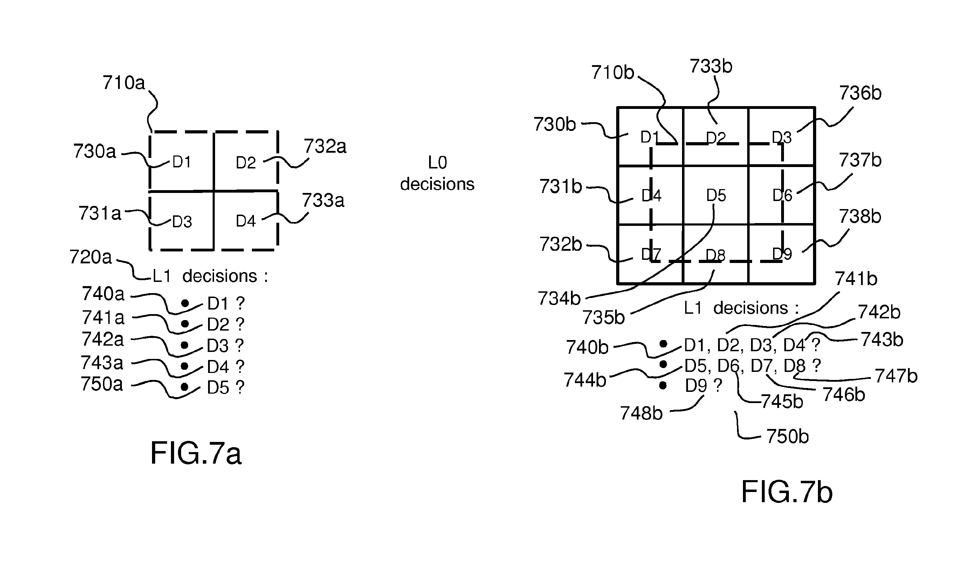

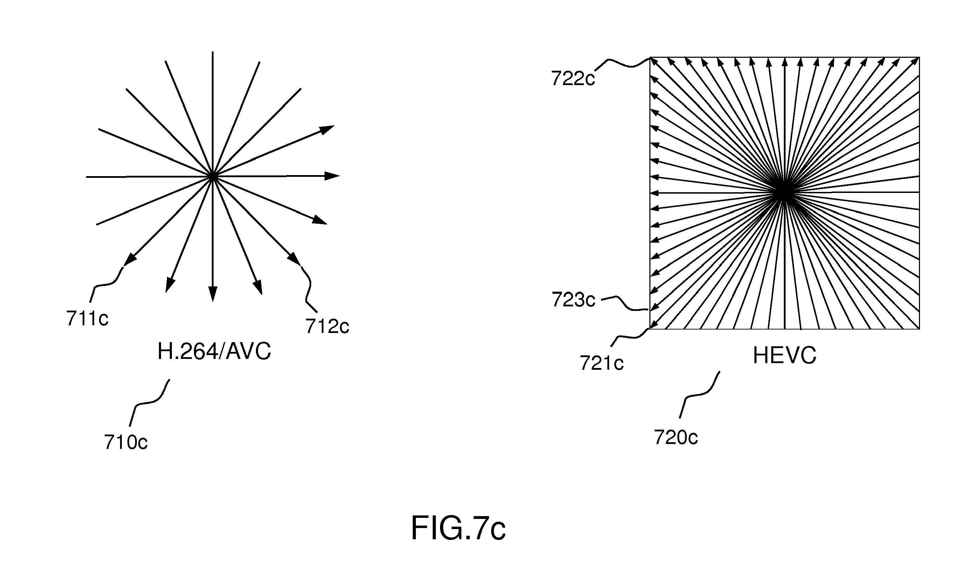

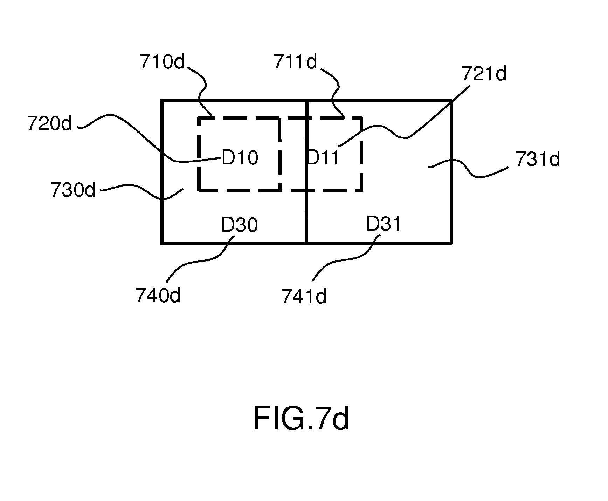

Figures 7a, 7b, 7c and 7d illustrate four examples of video coding decisions in four embodiments of the invention.

Figure 7a illustrates an example of video coding decision in an embodiment of the invention, in an exemplary case of the selection of a block type when the second representation has a resolution which is half the resolution of the first representation.

Such video coding decision may for example be performed in the module 320 or 340 of a video encoding device 300 according to the invention, or in the step 530 of a method 500 according to the invention.

The decision concerns the determination of a block type 720a of a block 710a of a video frame in the second representation. Since the second representation of the video has a resolution which is half the resolution of the first representation, the video has already been encoded in the first representation and the block 710a covers an area of the video frame covered by 4 blocks 730a, 731 a, 732a and 733a in the first representation, each one of this block being associated with a video coding decision for block type, respectively 740a, 741 a, 742a and 743a.

In an embodiment of the invention, the decisions 740a, 741a, 742a and 743a are evaluated and the best decision is selected as decision 720a. The symbol relates to this decision can therefore be expressed by two bits only, for example 00 for decision 740a, 01 for decision 741 a, 10 for decision 742a and 11 for decision 743a. This embodiment is advantageous, because it permits to store a symbol that comprise fewer bits than if the decision itself were stored. This therefore saves storage space and bandwidth for the transmission of metadata. Meanwhile, since blocks 710a covers the same area than blocks 730a, 731 a 732a and 733a, there is a good probability that at least one of the decisions 740a, 741 a, 742a and 743a produces good compression results. In addition, the test of decisions 740a, 741 a, 742a and 743a only is in many cases less costly at encoding than testing all possible block type decisions.

At transcoding, for example in module 450a or 451 b, or at step 620, the decision can then be retrieved by retrieving decisions 730a, 731 a, 732a and 733a from the first set of video coding decisions, and selecting the right decision by retrieving the symbol in the metadata that corresponds to this decision. The retrieval of video coding decisions at transcoding time is therefore straightforward and does not imply complex computation like a standard computation of block type.

Other embodiments define advantageous symbols. For example, if decisions 740a, 741a, 742a and 743a are identical, this identical decision can be used as decision 720a and no symbol needs to be stored in the metadata. In another example, if some decisions amongst 740a, 741a, 742a and 743a are identical, the symbol stored in the metadata could only designate unique decisions in order to further save storage space and network capacity. For example, if decisions 740a, 741 a and 742a are identical, the symbol representative of video coding decision 720a in the metadata could use a single bit: 0 for decision 740a/741a/742a, 1 for decision 743a.

In a number of other embodiments of the invention, decision 720a can be chosen as a decision other than 740a, 741 a, 742a or 743a, for example a decision 750a. These embodiments are advantageous by giving more flexibility and choice in video coding for the second representation.

In a number of embodiments of the invention, the decisions that correspond to a decision for a block that covers the same area in the first representation are coded in a limited number of bits, and the decisions that correspond to another decision are coded using an escape symbol and the decision itself. For example, the decision 720a can be coded using two bits if it corresponds to one of the decisions 740a, 741 a, 742a and 743a, and an escape symbol on 3 bits and the decision itself if it is another decision, for example the decision 750a. Other symbols representative of decisions can be used, for example a symbol per unique decision amongst 740a, 741 a, 742a and 743a, and an escape symbol.

This embodiment is advantageous. Indeed, in most cases one of the decisions 740a, 741 a, 742a and 743a will provide good compression results, be selected as decision 720a and coded on 2 bits. Meanwhile, in some unfrequent cases, when a decision 750a provides much better compression results, it will be coded altogether with an escape symbol. This embodiment therefore allows the storage of most decisions on a small number of bits, while keeping the flexibility of using video coding decisions that have not been used when coding the video content in the first representation.

This type of metadata representation can be used for video coding decisions other than block type. For example they can be used for deciding the motion vectors, transform types or intra prediction modes. It can also be used for determining block partition. Indeed, block partition is usually represented as a tree wherein the frame is successfully split in blocks, and blocks themselves split into blocks of smaller sizes. The block partition can therefore be seen as a succession of splitting decisions, the metadata being used for storing choices amongst possible splitting decisions when applicable.

In a number of embodiments of the invention, some coding decisions can be rescaled from the first to the second resolution. For example, if a motion vector is chosen amongst possible motion vectors that have been used in the first set of video coding decisions, the direction of the vector can be kept, while the length of the motion vector is rescaled from the first to the second resolution.

In a number of embodiments of the invention, the retrieval of video coding decisions is performed using sets of rules of conversion of decisions rather than symbols representative of decisions themselves. In the example depicted in figure 7a, a rule can define the decision that is performed according to decisions 740a, 741 a, 742a, 743a. Such rules can be of different types. For example, if a majority decision exists. amongst 740a, 741 a, 742a and 733a it can be selected. In other embodiments, a priority can be defined between decisions. For example, if 740a, 741 a, 742a, 743a are block type decisions, decision 720a can be intra block if at least one of decisions 740a, 741 a, 742a and 743a is intra block, and inter block if 740a, 741 a, 742a and 743a are all inter block.

More generally, in cases when the first and the second representation do not have the same resolution, the rules of conversion are rules that associate to a set of possible decisions in the first set a decision in the second set. These rules can be for example stored within a table. They can be defined for a whole video, a frame a GOP, or any other subpart of the video. They can be predefined or computed in an encoding device as optimized rules for a video or a subpart of a video, and transmitted in metadata.

Figure 7b illustrates an example of video coding decision in an embodiment of the invention, in an exemplary case of the selection of a block type when the second representation has a resolution which is lower the resolution of the first representation with a non-diadic ratio, a non dyadic ratio being a ratio which is not a power of two.

The resolution of the second representation is lower than the resolution of the first with a non-diadic ratio, which means that the ratio between the two is not a power of 2. In this example, the block 710b in the second representation for which a decision has to be made covers area also covered by blocks 730b, 731 b, 732b, 733b, 734b, 735b, 736b, 737b and 738b in the first representation.

Similarly to the decision 720a, the decision 720b associated with block 710b can be chosen amongst decisions 740b, 741 b, 742b, 743b, 744b, 745b, 746b, 747b and 748b of the same type associated with blocks 730b, 731 b, 732b, 733b, 734b, 735b, 736b, 737b and 738b respectively, and a further decision 750b.

The embodiments for the possible choices and representations of decision 720a can be applied to decision 720b according to the highest number of possible choices. For example, if the choice is restricted to the decisions 730b to 738b, a symbol representative of such decision can be coded on 4 bits, if a further decision 750b is applicable, an escape symbol, then the decision 750b itself can be stored in the metadata.

More generally, a decision for a block in the second representation can be selected amongst all blocks that cover the same area of the frame in the first representation. According to respective block partitions for the first and the second representation decisions can be chosen from decisions associated with blocks having a different size or shapes between the first and the second resolution.

In embodiments wherein rules of conversion from decisions in a first set to decisions in a second set are used, a rule can be used for retrieving decision 720b according to decisions 740b, 741 b, 742b, 743b, 744b, 745b, 746b, 747b and 748b.

Figure 7c illustrates an example of video coding decision in an embodiment of the invention, for the selection of an intra coding mode when the first representation is in HEVC, and the second representation in AVC.

AVC allows 9 intra coding modes, amongst which 8 directional coding modes 710c. On the contrary, HEVC allows 33 directional modes 720c for intra prediction. Each directional mode defines a direction in which the corresponding block is searched for performing intra prediction. Some intra coding modes are directly applicable from HEVC to AVC. For example, coding modes 721 c and 722c respectively refer to the same direction than coding modes 711 c and 712c. On the other hand, some coding modes exist in HEVC but not in AVC, for example mode 723c.

In a number of embodiments of the invention, when a decision in the first set of video coding decisions is directly applicable to the second representation, no symbol is outputted. This is for example the case if a block in the first representation uses the intra coding mode 721 c or 722c, that can be directly translated into coding mode 711 c or 712c for the second set of video coding decisions that apply to AVC. On the other hand, when a decision of the first set of video coding decisions is not applicable in the second set of video coding decisions, a new decision can be taken and stored in the metadata. This is the case for example if a decision in the first set is the intra coding mode 723c, and the second set of video coding decisions relates to AVC. This embodiment is advantageous, because there is no need to store any information in the metadata for all decisions that are applicable from the compression standard of the first representation to the compression standard of the second representation.

In another embodiment of the invention, the decision which is the closest is chosen by default, for example if a block is coded using the coding mode 723c in the first representation in HEVC, the coding mode 711 c which has the closest direction can be chosen by default for the corresponding decision in the second set in AVC. There is therefore no need for storing information in the metadata, unless an intra coding mode other than 711 c provides better compression results. This embodiment is advantageous, since it further reduces the size of metadata. Indeed, in this embodiment, only the decisions which are not considered as the closest possible decisions between a first compression standard and a second compression standard needs to be stored in the metadata.

It also possible to store the video coding decisions in the metadata only when they are not applicable from a first to a second video coding standard for other types of video coding decisions than intra coding mode. For example, this principle can apply to transform types, block partition, motion vectors or block types. It is also applicable between compression standards that share at least some coding decisions. For example, it is applicable between AVC and MPEG-2, HEVC and MPEG-2, VP10 and VP9, etc.

In embodiments wherein the retrieval of decisions of the second set of video coding decisions is performed using a set of rules of conversion of decisions of the first set of video coding decisions into said second set of video coding decisions, rules define, for each decision or a part of decisions in the first set, the corresponding decision to retrieve in the second set for the second representation.

Figure 7d illustrates an example of video coding decisions in an embodiment of the invention, in an exemplary case of the selection of a block type when the second representation has a resolution which is higher than the resolution of the first representation with a non-diadic ratio.

In this example, the block 710d in the second representation for which a decision has to be made covers only an area covered by block 730d in the first representation, while block 721 d in the second representation covers an area also covered by blocks 730d and 731 b in the first representation.

The only possible candidate for decision 720d associated with block 710d is the decision 740d associated with block 730d, while two decisions are possible for decision 721 d associated with block 711 a: decision 740d and decision 741 d associated with block 731 d.

Similarly to decisions 720a and 720b, decisions 720d and 721 d can retrieved according to possible decisions 740d and 741 d of the first set, and metadata comprising symbols representative of decisions 710d and 711 d respectively, or a set of rules of conversion of decisions of the first set into decisions of the second set.

A user terminal configured for receiving video content in OTT mode can advantageously be configured for communicating and sending requests to a transcoding device according to the invention, such as the transcoding device 400a and 400b. In a CDN network, this user terminal can for example connect to edge servers 120, 121 and 122 rather than an origin server 110. Edge servers 120, 121, 122 being able to transcode the video content from a first to a second representation with high speed and flexibility, a user terminal according to the invention can be configured for requesting more easily video in different representations according to operating parameters. For example, the user terminal may be configured for requesting video content in a lower resolution when the available bandwidth diminishes. The user terminal according to the invention can also be configured to request video content whose decoding requires less CPU consumption when its battery is under a predefined threshold. For example, it may request video content in a lower resolution, in a compression standard with a lower complexity when battery level is under a predetermined threshold.

The examples described above are given as illustrations of embodiments of the invention. They do not in any way limit the scope of the invention which is defined by the claims which follows.

## Claims

1. A video encoding device (300) comprising:
- A first module (310) configured for encoding an input video content (313) into a compressed video content (311) in a first representation, a representation being defined by at least a resolution and a compression standard, said encoding comprising the computation of a first set (312) of video coding decisions;
- A second module (320) configured for generating symbols representative of a correspondence between a video coding decision in a second set of video coding decisions for a second representation of said input video content and at least one video coding decision in the first set of video coding decisions.

2. The video encoding device of claim 1, wherein a symbol represents a video coding decision in the second set of video coding decisions in relation to at least one video coding decision in the first set.

3. The video encoding device of claim 1, wherein a symbol represents a rule of conversion of at least a video coding decision in the first set of video coding decisions into a video coding decision in the second set of video coding decisions.

4. The video encoding device of one of claims 1 to 3, wherein video coding decisions comprise one of a determination of a block partition, a determination of a block type, a determination of a motion vector, an intra prediction mode, and a the determination of a transform type.

5. The video encoding device of one of claims 1 to 4, that further comprises a third module (350) configured for sub-sampling video frames, and wherein:
- The first video representation has a first video resolution and the second video representation has a second resolution, lower than the first;
- The third module (350) is configured for sub-sampling at least one frame of video from the first to the second resolution;
- The second module (320) is configured for performing at least one video coding decision for at least one video coding block, said decision comprising:
- retrieving a subset of the first set (312) of video coding decisions, said subset comprising all decisions of the same type than the at least one video coding decision that apply to the area of the at least one frame that is covered by the at least one video coding block;
- testing all the video coding decisions of the subset;
- selecting one of the video coding decisions of the subset as the video coding decision in the second set;
- generating a symbol representative of the decision selected in relation to the subset.

6. The video encoding device of one of claims 1 to 4, wherein:
- The first video representation has a first video compression standard and the second video representation has a second video compression standard, said first video compression standard allowing, for at least one type of video coding decisions, all the possible decisions provisioned by the second video compression standard, and at least one decision forbidden by the second video compression standard;
- The second module (320) is configured for performing at least one video coding decision of the at least one type of video coding decisions for at least one video coding block, said decision comprising:
- retrieving the corresponding video coding decision in the first set (312) of video coding decisions;
- if the corresponding video coding decision is allowed in the second video compression standard, use it as the at least one video coding decision;
- if the corresponding video coding decision is not allowed in the second video compression standard, retrieve a set of possible decisions in the second video standard and generate a symbol representative of the video coding decision in the second set in relation to the set of possible decisions.

7. A video transcoding device (400a, 400b) comprising:
- A first module (440a, 440b) configured for decoding a compressed video content in a first representation (410a, 410b), a representation being defined by at least one of a resolution and a compression standard, the encoding of said compressed video having been performed according to a first set of video coding decisions (441 a, 441 b, 442b, 443b), and extracting the first set of video coding decisions (441 a, 441 b, 442b, 443b);
- A second module (450a, 450b) configured for re-encoding the video into a compressed video content in the second representation (460a, 460b), at least one decision in re-encoding being performed according to the first set (441 a, 441 b, 442b, 443b) of video coding decisions and symbols representative of a correspondence between a video coding decision in a second set of video coding decisions for a second representation of said compressed video content and at least one video coding decision in the first set of video coding decisions.

8. The video transcoding device of claim 7, wherein a symbol represents a video coding decision in the second set of video coding decisions in relation to at least one video coding decision in the first set of video coding decisions.

9. The video transcoding device of claim 7, wherein a symbol represents a rule of conversion of at least a video coding decision in the first set of video coding decisions into a video coding decision in the second set of video coding decisions.

10. The video transcoding device of one of claims 7 to 9, wherein video coding decisions comprise one of a determination of a block partition (441 b), a determination of a block type (441 b), a determination of a motion vector (444b), an intra prediction mode (443b), and a determination of a transform type (442b).

11. The video transcoding device of one of claims 7 to 10, that comprises an
additional module for sub-sampling video frames wherein:
- The first video representation has a first video resolution and the second video representation has a second resolution, lower than the first;
- The additional module is configured for sub-sampling at least one frame of video from the first to the second resolution between the first module (440a, 440b) and the second module (450a, 450b);
- The second module (450a, 450b) is configured for retrieving at least one video coding decision for at least one video coding block, said retrieval comprising:
- Retrieving a subset of the first set (441 a, 441 b, 442b, 443b) of video coding decisions, said subset comprising all decisions of the same type than the at least one video coding decision that apply to the area of the at least one frame that is covered by the at least one video block;
- Retrieving a symbol representative of the video coding decision in the second set of video coding decisions in relation to said subset.

12. The video transcoding device of one of claims 7 to 10, wherein :
- The first video representation uses a first video compression standard and the second video representation uses a second video compression standard, said first video compression standard allowing, for at least one type of video coding decisions, all the possible decisions provisioned by the second video compression standard, and decisions forbidden by the second video compression standard;
- The second module (450a, 450b) is configured for retrieving at least one video coding decision of the at least one type of video coding decisions for at least one video coding block, said retrieval comprising:
- retrieving the corresponding video coding decision in the first set (441 a, 441 b, 442b, 443b) of video coding decisions;
- if the corresponding video coding decision is allowed in the second video compression standard, use it as the at least one video coding decision;
- if the corresponding video coding decision is not allowed in the second video compression standard, retrieve a set of possible decisions in the second video standard according to the corresponding video coding decision, and a symbol representative the video coding decision in the second set of video coding decision in relation to the set of possible decisions.

13. The video transcoding device of one of claims 7 to 12, wherein the second module (450b) comprises one of:
- A first sub-module (451 b) for performing block partition which is configured for partitioning blocks in accordance to the block partition (441 b) of the compressed video content in the first representation (421 b) and the symbols representative of a correspondence between a video coding decision in a second set of video coding decisions for a second representation of said compressed video content and at least one video coding decision in the first set of video coding decisions;
- A second sub-module (452b) for applying transforms which is configured for choosing a transform in accordance to the transforms (442b) of the compressed video content in the first representation (421 b) and the symbols representative of a correspondence between a video coding decision in a second set of video coding decisions for a second representation of said compressed video content and at least one video coding decision in the first set of video coding decisions;
- A third sub-module (453b) for performing intra prediction which is configured for performing intra prediction in accordance to intra prediction of the compressed video content in the first representation (421 b) and the symbols representative of a correspondence between a video coding decision in a second set of video coding decisions for a second representation of said compressed video content and at least one video coding decision in the first set of video coding decisions;
- A fourth sub-module (454b) for performing inter prediction and motion compensation which is configured for performing inter prediction and motion compensation in accordance to motion vectors (443b) of the compressed video content in the first representation (421 b) and the symbols representative of a correspondence between a video coding decision in a second set of video coding decisions for a second representation of said compressed video content and at least one video coding decision in the first set of video coding decisions.

14. A method (500) for encoding an input video content (510) comprising:
- Encoding (520) the input video content (510) into a compressed video content (521) in a first representation, a representation being defined at least by a resolution and a compression standard, said encoding comprising the computation of a first set (522) of video coding decisions;
- Computing (530) symbols (531) representative of a correspondence between a video coding decision in a second set of video coding decisions for a second representation of said input video content and at least one video coding decision in the first set (522) of video coding decisions.

15. A method (600) for transcoding a video content comprising:
- Decoding (620) a compressed video content (610) in a first representation, a representation being defined at least by a resolution and a compression standard, the encoding of said compressed video having been performed according to a first set (621) of video coding decisions, and extracting the first set (621) of video coding decisions;
- Re-encoding (630) the video into a compressed video content in a second representation, at least one decision in re-encoding being performed according to the first set (621) of video coding decisions and symbols (611) representative of a correspondence between a video coding decision in a second set of video coding decisions for a second representation of said video content and at least one video coding decision in the first set of video coding decisions.

16. A computer program product, stored on a computer readable medium, configured for encoding an input video content comprising:
- Code means for encoding the input video content into a compressed video content in a first representation, a representation being defined at least by a resolution and a compression standard, said encoding comprising the computation of a first set of video coding decisions;
- Code means for computing symbols representative of a correspondence between a video coding decision in a second set of video coding decisions for a second representation of said input video content and at least one video coding decision in the first set of video coding decisions.

17. A computer program product, stored on a computer readable medium, configured for transcoding a video content comprising:
- Code means for decoding a compressed video content in a first representation, a representation being defined at least by a resolution and a compression standard, the encoding of said compressed video having been performed according to a first set of video coding decisions, and extracting the first set of video coding decisions;
- Code means for re-encoding the video into a compressed video content in a second representation, at least one decision in re-encoding being performed according to the first set of video coding decisions and symbols representative of a correspondence between a video coding decision in a second set of video coding decisions for the second representation of said input video content and at least one video coding decision in the first set of video coding decisions.

18. A user terminal comprising communication, video decoding and video playback capabilities, said user terminal being configured for:
- Sending to an edge server a request for receiving a video content, said content being available on the server in a plurality of representations, a representation being defined at least by a resolution and a compression standard, said request containing a selection of a representation in the plurality of representations;
- Receiving from the edge server the video content in the selected representation, the selected representation being produced on the edge server by a video transcoding method using as input received from an origin server: i) a source of the video content in a master representation in at least one of a higher resolution and a more advanced standard; ii) at least one of the decision criteria used for coding said selected representation.
